# FASCICULE DE BREVET EUROPEEN

(11) **EP 1 195 292 B1**
(45) Date de publication et mention de la délivrance du brevet: **25.06.2008**
(21) Numéro de dépôt: 01402327.9
(22) Date de dépôt: 10.09.2001
(51) Int. Cl.: B60Q 1/115

(54) **Dispositif de correction d'assiette à câblage simplifié pour véhicule automobile**
Vorrichtung mit vereinfachter Verdrahtung zur Lageregelung für Fahrzeuge
Device with simplified wiring for level correction of a vehicle

(30) Priorité: 09.10.2000 FR 0012871
(43) Date de publication de la demande: 10.04.2002
(73) Titulaire: VALEO VISION, 93012 Bobigny Cédex (FR)
(72) Inventeur: Cara, Hervé, c/o Valeo Vision, 93012 Bobigny Cédex (FR); Dari, Alain c/o Valeo Vision, 93012 Bobigny Cédex (FR)
(74) Mandataire: Hervouet, Sylvie

(56) Documents cités:
- EP-A- 0 901 314
- EP-A- 0 906 850
- FR-A- 2 790 235

## Description

La présente invention concerne les dispositifs de correction automatique d'assiette, capables de faire varier l'orientation en site des projecteurs d'un véhicule en fonction des variations de l'assiette de celui-ci.

On connaît de tels dispositifs, en particulier dans le domaine automobile. Ils mettent généralement en oeuvre deux capteurs de hauteur, associés respectivement aux essieux avant et arrière du véhicule et reliés à des moyens de calcul de l'assiette du véhicule. Ces moyens de calcul d'assiette commandent à leur tour l'orientation des réflecteurs des projecteurs du véhicule, qui sont montés mobiles, de manière à adapter la direction d'émission des faisceaux lumineux à l'assiette du véhicule.

Un dispositif selon le préambule de la revendication 1 est connu du document FR-A-2 790 235 par exemple.

La correction d'orientation effectuée par de tels dispositifs peut s'effectuer selon deux modes différents :
- correction d'assiette statique, dans laquelle un signal d'assiette instantané fourni par les capteurs est débarrassé de toutes ses composantes transitoires, pour obtenir un signal représentatif seulement de la charge du véhicule,
- correction d'assiette dynamique, dans laquelle il est tenu compte instantanément des variations d'assiette dues notamment aux accélérations, décélérations et virages du véhicule pour modifier en temps réel la hauteur des faisceaux d'éclairage.

Ces dispositifs effectuent ainsi une correction statique à laquelle peut se superposer pour les modèles les plus perfectionnés une correction dynamique, des moyens élaborés de filtrage du signal étant alors associés aux moyens de calcul d'assiette du véhicule.

Et pour mettre en oeuvre une correction d'orientation des projecteurs, on connaît actuellement deux principaux types de dispositifs, qu'ils effectuent une correction dynamique ou non.

Le premier type, courant, met en oeuvre deux capteurs situés respectivement à l'avant et à l'arrière du véhicule, reliés chacun par un conducteur électrique respectif aux moyens de calcul d'assiette.

L'inconvénient principal d'une telle configuration réside dans le coût de câblage et de connectique, alors que les constructeurs automobiles cherchent actuellement à réduire au maximum le nombre et la longueur des câbles, pour réduire la complexité des configurations des câblages et diminuer les prix de revient et le poids des véhicules.

De plus, la multiplication des connexions du dispositif peut également diminuer sa fiabilité.

On pourrait également envisager de rassembler, selon un deuxième type de dispositif, le capteur avant et les moyens de calcul d'assiette dans un même sous-ensemble du dispositif, qui recevrait en entrée l'information de hauteur du capteur arrière et qui élaborerait en sortie un signal de commande de l'orientation des réflecteurs des projecteurs.

Ce deuxième type de dispositif permettrait de réduire le câblage, mais il impliquerait également des inconvénients :

Premièrement, le capteur/calculateur avant serait d'une part complexe car il serait nécessaire d'y intégrer un calculateur d'assiette, et d'autre part encombrant et difficile à implanter.

Deuxièmement, il n'est pas possible de réaliser un tel dispositif avec un capteur avant standard, identique au capteur arrière. Et le capteur avant doit donc être développé pour un véhicule particulier car il contient des paramètres spécifiques au véhicule.

Un but de l'invention est de permettre de réaliser un dispositif de correction d'orientation de faisceaux lumineux d'un ou plusieurs projecteurs d'un véhicule, notamment automobile, en s'affranchissant des inconvénients mentionnés ci-dessus.

Un autre but de l'invention est de garder une très grande précision sur l'acquisition et l'exploitation des mesures fournies par les capteurs.

Un autre but de l'invention est de permettre en outre d'utiliser des capteurs standards pour la mise en oeuvre de tels dispositifs.

Afin d'atteindre ces buts, l'invention propose un dispositif de correction selon la revendication 1.

Des aspects préférés, mais non limitatifs du dispositif selon l'invention sont les suivants :
- le(s)dit(s) premier(s) câble(s) conducteur(s) et ledit second câble conducteur constituent un bus unique sur lequel les signaux élémentaires sont combinés,
- lesdits capteurs sont montés en parallèle sur ledit bus unique,
- chaque capteur est distinct des moyens de traitement,
- les capteurs délivrent chacun un signal de fréquence fixe comportant une partie utile pendant une durée utile, dont le rapport cyclique variable est représentatif de la mesure délivrée par le capteur associé,
- le signal élémentaire émis par chaque capteur comprend un signal de synchronisation pendant une durée de synchronisation, immédiatement avant ladite partie utile,
- pour chaque capteur la somme de la durée utile et de la durée de synchronisation est inférieure à une fraction déterminée de ladite fréquence fixe,
- la somme desdites fractions déterminées est inférieure ou égale à l'unité,
- le rapport cyclique de la partie utile de chaque signal élémentaire est toujours compris entre une valeur limite basse supérieure à 0%, et une valeur limite haute inférieure à 100%,
- ladite limite basse est égale à 10% et ladite limite haute est égale à 90%,
- la durée de synchronisation de chaque signal élémentaire est toujours inférieure à la durée que peut prendre ladite partie utile lorsque celle-ci est égale à sa limite basse, ou toujours supérieure à la durée que peut prendre ladite partie utile lorsque celle-ci est égale à sa limite haute,
- ladite fréquence fixe est la même pour tous les capteurs,
- les durées de synchronisation des capteurs respectifs du dispositif sont différentes les unes des autres,
- chaque capteur esclave est muni de moyens pour scruter la présence du signal élémentaire du capteur maître sur le câble conducteur unique et pour synchroniser l'émission de son signal élémentaire à l'émission du signal élémentaire du capteur maître une fois celui-ci détecté,
- chaque capteur esclave est apte à émettre son signal élémentaire en cas d'absence du signal élémentaire du capteur maître sur le câble conducteur unique pendant une durée supérieure à la période dudit signal du capteur maître.

D'autres aspects, buts et avantages de l'invention apparaîtront mieux à la lecture de la description suivante d'une forme de réalisation de l'invention, faite en référence aux dessins annexés, sur lesquels :
- les figures 1a et 1b sont des schémas de principe de deux modes de réalisation d'un dispositif de correction de l'orientation des faisceaux des deux projecteurs d'un véhicule automobile, selon le premier type connu mentionné ci-dessus,
- la figure 2a est un schéma de principe d'un premier mode de réalisation selon l'invention d'un dispositif de correction,
- la figure 2b est un schéma de principe d'un deuxième mode de réalisation selon l'invention d'un dispositif de correction,
- la figure 3 est une vue partielle du dispositif de la figure 2b, détaillant certains composants,
- la figure 4 montre l'allure des signaux pouvant être délivrés par chacun des deux capteurs d'un dispositif selon l'invention, ainsi que la résultante délivrée aux moyens de calcul d'assiette de ce dispositif,
- la figure 5 est une représentation des deux capteurs d'une variante d'un dispositif selon l'invention, faisant apparaître des moyens de connectique permettant de différencier les signaux de sortie des capteurs.

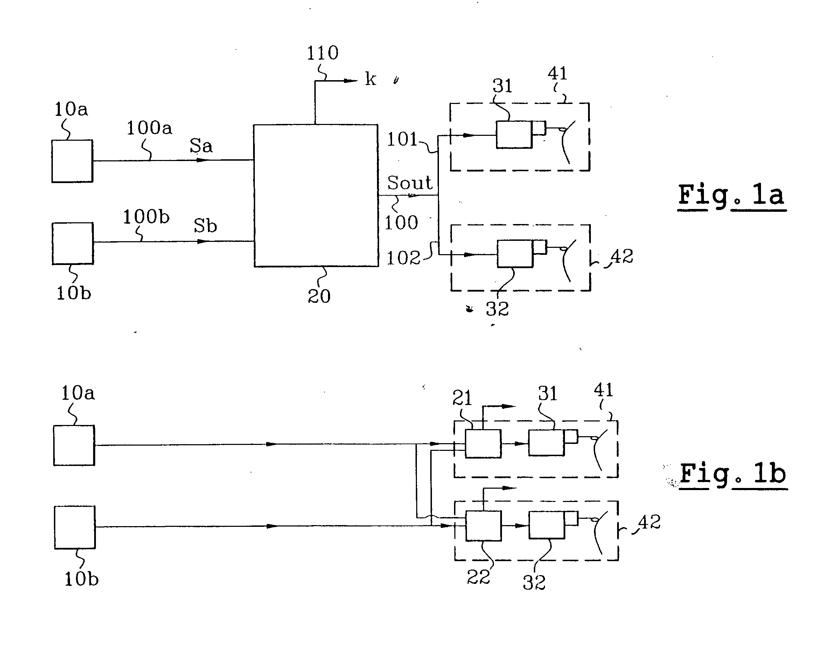

En référence tout d'abord à la figure 1a, on a représenté un dispositif, selon le premier type connu mentionné en introduction, de correction d'orientation des faisceaux lumineux des projecteurs d'un véhicule automobile.

Ce dispositif comprend deux capteurs de hauteur 10a et 10b, associés respectivement aux essieux arrière et avant du véhicule. Ces capteurs délivrent des signaux électriques respectifs Sₐ, S_{b} représentatifs de la distance entre leur essieu respectif et la caisse.

Les signaux issus des capteurs 10a et 10b sont transmis par l'intermédiaire de conducteurs électriques respectifs 100a et 100b, à un circuit de calcul 20 pouvant comporter des moyens de filtrage.

Le circuit 20 détermine à partir de ces deux signaux d'entrée Sₐ et S_{b} et d'une information d'entraxe entre les essieux, une information d'assiette du véhicule, également sous forme d'un signal électrique Sₒᵤₜ.

Le signal Sₒᵤₜ est transmis par l'intermédiaire d'un conducteur électrique 100 à deux actionneurs 31 et 32, intégrés chacun dans un des projecteurs 41, 42 du véhicule, et qui agissent mécaniquement sur le réflecteur de leur projecteur respectif, l'amplitude et le sens du déplacement des réflecteurs étant fonction du signal Sₒᵤₜ.

Un conducteur électrique supplémentaire 110 relie en outre le circuit de calcul 20 à des moyens de contrôle du véhicule (non représentés), auxquels il délivre un signal K de diagnostic sur le fonctionnement du dispositif.

Le circuit de calcul 20 est, dans le mode de réalisation connu de la figure 1a, situé à l'extérieur des projecteurs, et relié par deux conducteurs différents 101 et 102 à chacun des actionneurs.

Il est également possible, selon le premier type de dispositif de l'état de la technique, d'implanter à l'intérieur de chaque projecteur du véhicule 41 et 42 un circuit de calcul respectif 21 et 22, comme représenté sur la figure 1b. Il est alors nécessaire de prévoir deux conducteurs électriques entre chacun des deux capteurs 10a et 10b et chacun des deux circuits de calcul 21 et 22.

Les deux capteurs 10a et 10b sont généralement de type à sortie PWM (initiales anglo-saxonnes mises pour Pulse Width Modulation) qui module le rapport cyclique du signal logique de sortie des capteurs.

Comme on l'a dit, le type de dispositif connu décrit ci-dessus présente un certain nombre d'inconvénients ; il a été décrit pour exposer à titre introductif le principe général d'un tel dispositif et on va maintenant décrire ci-dessous différentes variantes de mise en oeuvre de dispositifs selon l'invention.

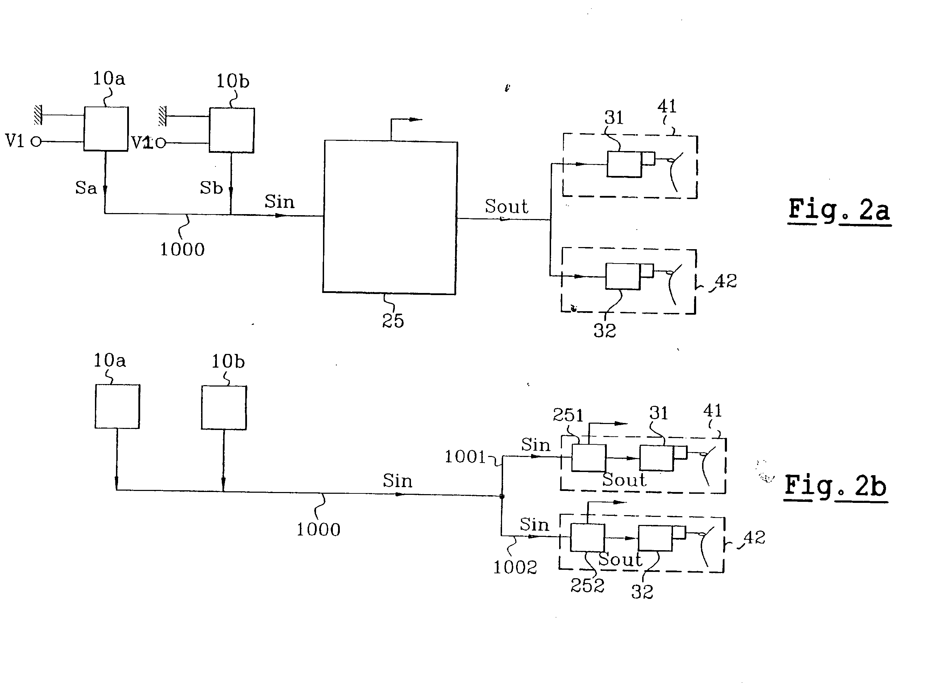

En référence maintenant à la figure 2a, on a représenté l'architecture générale d'un dispositif selon l'invention destiné à la même fonction de correction de l'orientation des faisceaux des deux projecteurs d'un véhicule automobile.

Dans la suite de ce texte, les éléments semblables à ceux déjà décrits en référence aux figures 1a et 1b seront référencés de la même manière.

Sur la figure 2a, les deux capteurs 10a et 10b sont, comme dans les dispositifs connus, de type à sortie PWM, et mesurent les hauteurs respectives de caisse au-dessus des essieux arrière et avant.

Les capteurs sont également de type standard, similaires à ceux mis en oeuvre dans les dispositifs existants. Chaque capteur est alimenté par une source de tension (représentée ici par les potentiels masse et V1), prélevée dans le véhicule à proximité des capteurs et pouvant correspondre à la tension du réseau de bord du véhicule.

Selon un aspect de l'invention, les deux capteurs 10a et 10b sont reliés à un bus unique 1000 de transmission de données, sur lequel les signaux Sₐ et S_{b} issus respectivement des capteurs 10a et 10b se combinent comme on va l'expliquer pour former le signal Sᵢₙ délivré par le bus 1000 à un circuit 25 de calcul d'assiette. La partie aval de l'architecture de ce dispositif est similaire à celle représentée sur la figure 1a.

Selon une variante de l'invention, il est ici encore possible d'intégrer un circuit de calcul d'assiette respectif 251 et 252 à l'intérieur de chacun des deux projecteurs 41 et 42 du véhicule, comme représenté sur la figure 2b. Ce mode de réalisation de l'invention permet de s'affranchir des questions d'implantation et de support pour un circuit de calcul extérieur aux projecteurs.

Dans ce cas, deux conducteurs 1001 et 1002 relient les circuits respectifs 251 et 252 à un point du bus 1000 situé à proximité des projecteurs. Les deux circuits 251 et 252 reçoivent alors chacun le même signal Sᵢₙ et délivrent chacun le même signal Sₒᵤₜ à l'actionneur respectif auquel ils sont associés.

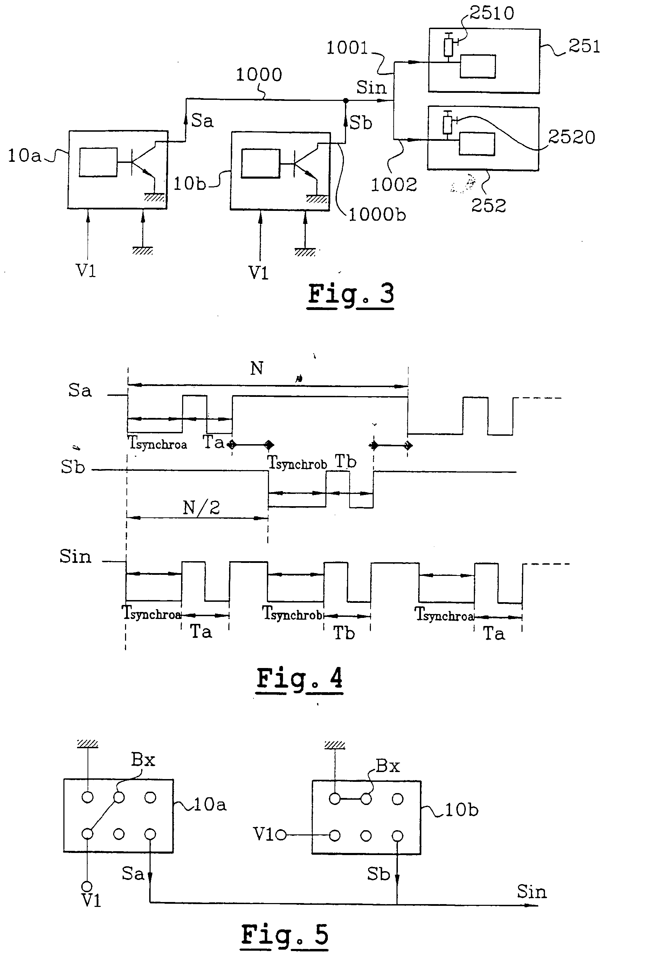

La figure 3 reprend l'architecture de la figure 2b et détaille la structure des capteurs 10a et 10b, qui ont chacun une sortie à collecteur ouvert. Ces capteurs sont essentiellement identiques ; cependant ils ont éventuellement été différenciés pour leur mise en oeuvre d'une manière qui sera expliquée plus loin dans ce texte.

Le capteur arrière 10a émet un signal Sₐ représentatif de la mesure de hauteur effectuée par le capteur 10a à l'arrière du véhicule.

Ce signal Sₐ est représenté dans la partie haute de la figure 4. Il s'agit (comme le signal S_{b} issu du capteur 10b) d'un signal numérique de type PWM. Le signal Sₐ est émis selon une période N.

Chaque signal élémentaire Sₐ émis pendant une période N se décompose de la manière suivante :
- un top de synchronisation d'une durée déterminée T_{Synchroa} pendant laquelle le signal Sₐ est à son niveau bas (le niveau de référence étant le niveau haut),
- suivi d'un signal dit « utile » de durée Tₐ,
- après quoi le signal Sₐ revient à sa position haute de référence jusqu'à la fin de la période N, la somme des durées T_{Synchroa} + Tₐ étant inférieure à la durée de la période N (et même comme on va le voir à la moitié de cette durée).

Les valeurs T_{Synchroa} et Tₐ sont spécifiquement associées au capteur 10a.

Le signal utile émis pendant la durée Tₐ est représentatif de la mesure effectuée par ledit capteur 10a, le rapport cyclique de ce signal étant directement corrélé à cette mesure.

Dans un mode de réalisation préféré de l'invention, ce signal est étalonné de sorte que ledit rapport cyclique est toujours compris entre une valeur limite basse de 10% et une valeur limite haute de 90%.

Selon un autre aspect de l'invention, le capteur 10a fonctionne comme un capteur maître, c'est-à-dire qu'il émet son signal Sₐ de manière aveugle, sans être influencé par un signal pouvant être émis par le capteur 10b qui se trouve en aval sur le bus 1000, ou par tout signal externe au capteur 10a.

Et le capteur 10b fonctionne quant à lui comme un capteur esclave du capteur 10a (c'est-à-dire que comme on va le voir le fonctionnement de ce capteur est fonction du signal Sₐ émis par le capteur maître 10a) ; à ces fins, la liaison 1000b reliant ce capteur au bus 1000 de transmission des données autorise la réception par le capteur 10b d'un signal recopié du signal Sₐ dans un contrôleur du capteur 10b.

De la sorte, le capteur 10b scrute en permanence le signal Sₐ sur le bus 1000 de transmission, afin de se synchroniser sur ce signal pour y superposer le signal S_{b} propre au capteur 10b.

Lorsque le capteur 10b a ainsi répéré le signal de synchronisation du capteur 10a au début d'une période N d'émission du signal Sₐ, il se synchronise sur le signal Sₐ pour émettre à son tour son signal propre S_{b} sur le bus 1000, au bout d'une durée N/2.

Comme on l'a dit, la somme des durées T_{Synchroa} + Tₐ est inférieure à N/2, de sorte que pendant la deuxième moitié de la période N le signal Sₐ est à son niveau « muet » de référence, ce qui constitue une durée d'émission disponible pour le signal S_{b}.

Le signal S_{b} est similaire au signal Sₐ ; il se décompose en :
- un top de synchronisation d'une durée T_{Synchrob} pendant laquelle le signal S_{b} est en position basse. De préférence, la valeur de T_{Synchrob} est différente de la valeur de T_{Synchroa},
- suivi d'un signal utile de durée T_{b} dont le rapport cyclique est directement corrélé à la mesure effectuée par le capteur 10b,
- après quoi le signal S_{b} revient comme le signal Sₐ à son niveau « muet » de référence, avant la fin de la période N car la somme des durées T_{Synchrob} + T_{b} est également inférieure à N/2.

Il apparaît ainsi que les capteurs 10a et 10b émettent chacun sur une moitié de période N, le capteur esclave 10b se calant sur la synchronisation émise par le capteur maître 10a.

On précise que si ces deux capteurs sont ainsi harmonisés en fréquence (émission selon la même fréquence), les durées T_{Synchroa} et T_{Synchrob} sont différentes, de sorte que les moyens de calcul 251 et 252 qui reçoivent le signal Sᵢₙ = Sₐ x S_{b} par l'intermédiaire des conducteurs respectifs 1001 et 1002 peuvent identifier les signaux respectifs associés à chacun des deux capteurs.

Et on remarquera également que les signaux Sₐ et S_{b} sont transmis aux moyens de calcul sans aucune dégradation de sorte que les moyens de calcul disposent de mesures exactes pour les capteurs 10ₐ et 10_{b}.

Le signal Sᵢₙ est représenté dans la partie basse de la figure 4. Ce signal périodique comprend ainsi à l'intérieur d'une même période N :
- un top de synchronisation du signal Sₐ pendant la période T_{Synchroa},
- suivi d'un signal représentatif de la mesure du capteur 10a pendant la durée Tₐ, le rapport cyclique de ce signal utile étant directement corrélé à la mesure du capteur 10a,
- vient ensuite une période « muette » pendant laquelle le signal Sᵢₙ est à son niveau de référence haut,
- à N/2 est émis le top de synchronisation du signal S_{b} pendant une période T_{Synchrob},
- ce deuxième top de synchronisation spécifique au capteur 10b est immédiatement suivi, pendant une durée T_{b}, d'un signal représentatif de la mesure effectuée par le capteur avant 10b,
- après quoi la période N se termine par une deuxième période « muette » pendant laquelle le signal Sᵢₙ est de nouveau à son niveau de référence haut.

Dans les cas où le capteur esclave 10b ne détecte aucun signal Sₐ sur le bus 1000, il émet automatiquement au bout d'une durée supérieure à N (qui dans un mode de réalisation de l'invention peut être égale à 1,5 N), son signal S_{b} sur le bus 1000, avec la période N qui est commune aux signaux Sₐ et S_{b}.

Le fait que les deux capteurs 10a et 10b soient associés à des tops de synchronisation de durées différentes permet également aux calculateurs 251 et 252 de recevoir et distinguer le signal S_{b} même en cas de défaillance du capteur 10a, ou inversement.

Cette information peut être utilisée par les calculateurs 251 et 252 pour élaborer selon un mode dégradé (qui ne sera pas détaillé ici) une consigne de correction d'orientation des projecteurs du véhicule.

Dans tous les cas, le capteur 10b continue à scruter la présence du signal Sₐ sur le bus 1000, et se resynchronise automatiquement selon la procédure exposée ci-dessus avec ce signal Sₐ lorsque celui-ci est à nouveau présent.

On précise que dans un mode préféré de réalisation de l'invention, les rapports cycliques des parties « utiles » des signaux Sₐ et S_{b} (c'est-à-dire les parties de signaux émises pendant les durées respectives Tₐ et T_{b}, qui sont représentatives des mesures respectives effectuées par les capteurs 10a et 10b) sont compris entre une limite basse supérieure à 0% et une limite haute inférieure à 100%, par exemple entre 10% et 90%.

Et toujours selon ce mode préféré de réalisation de l'invention, la durée des tops de synchronisation est définie de manière à être toujours en dehors de ces limites, c'est-à-dire que la durée du top de synchronisation du signal Sₐ sera toujours inférieure à 10% de la durée de Tₐ, ou toujours supérieure à 90% de cette durée Tₐ, et qu'il en sera de même pour le signal S_{b}.

Ceci permet aux moyens de calcul recevant le signal Sᵢₙ de discriminer sans ambiguïté les tops de synchronisation et les parties utiles des signaux.

L'étage d'entrée de chacun des calculateurs 251 et 252 est muni d'une résistance de type « pull-up » référencée respectivement 2510 et 2520, ces résistances étant compatibles avec les sorties à collecteur ouvert des capteurs.

Il est également possible selon l'invention de monter les capteurs en série, en reliant le capteur arrière 10a au capteur avant 10b par l'intermédiaire d'un premier tronçon de bus transmettant une information Sₐ de hauteur de l'arrière de la caisse du véhicule, le capteur avant étant par ailleurs relié au circuit de calcul d'assiette par un deuxième tronçon de bus qui transmet le signal Sᵢₙ combinant les deux informations de hauteur de caisse à l'arrière et à l'avant du véhicule.

A titre indicatif, les paramètres des signaux Sₐ et S_{b} peuvent avoir par exemple les valeurs suivantes :

| **Nom du paramètre** | **Durée de la période correspondant (ms)** |
|---|---|
| T_{Synchroa} | 2,5 |
| Tₐ | 2,5 |
| T_{Synchrob} | 3 |
| T_{b} | 2,5 |
| N | 16 |

On précise que les valeurs ne sont nullement limitatives.

On a dit que les capteurs 10a et 10b étaient identiques. Ces capteurs ont cependant comme on l'a vu des caractéristiques différentes, les durées de top de synchronisation étant de préférence différentes et pouvant être adaptées selon les besoins.

Pour adapter de la sorte les durées des différentes parties des signaux émis par ces capteurs, il est possible de programmer un composant logiciel spécifique du capteur.

Il est également possible de prévoir des moyens simples de connectique extérieurs au capteur.

La figure 5 représente ainsi schématiquement deux capteurs alimentés chacun par une source V1 (pouvant être la tension positive du réseau de bord du véhicule). Ce sont les connexions effectuées sur le boîtier de chaque capteur qui déterminent les caractéristiques de pulsation des signaux respectifs Sₐ, S_{b} des capteurs: chaque capteur 10a, 10b comprend ainsi une borne Bx qui peut être reliée soit à une source de potentiel V1, soit à la masse.

Un circuit logique associé au capteur fixe alors la durée du top de synchronisation du signal de sortie Sₐ, S_{b} en fonction du potentiel auquel est reliée la borne Bx.

Et il est de même possible de fixer avec un autre élément de connectique dédié des durées spécifiques pour les plages Tₐ et T_{b} pendant lesquelles les capteurs émettent leur signal utile, bien que dans un mode principal de réalisation de l'invention ces deux durées soient égales afin de standardiser au maximum les capteurs mis en oeuvre dans le dispositif selon l'invention et de simplifier leur conception.

Il apparaît ainsi que le dispositif selon l'invention permet de relier deux capteurs similaires à un bus unique de transmission de données acheminant la combinaison des signaux issus des différents capteurs à un ou plusieurs circuits de calcul d'assiette.

On comprendra que le nombre de capteurs n'est pas limité à deux, mais que le dispositif peut également comporter si besoin des capteurs supplémentaires reliés en parallèle au bus unique de transmission de données, ou montés en série.

Dans le cas de multiples capteurs, un capteur amont (correspondant au capteur 10a) est maître, les autres capteurs scrutant la présence de son signal sur le bus commun pour se synchroniser et émettre selon des plages temporelles prédéterminées. Il est également possible de prévoir des hiérarchies entre les capteurs en cas de défaut du capteur maître, afin qu'un capteur défini devienne « maître » en cas de défaillance du capteur maître.

Et dans ce cas d'un dispositif selon l'invention à multiples capteurs, on pourra prévoir que pour chaque signal élémentaire issu d'un des capteurs, la somme de la durée du top de synchronisation et de la durée du signal utile soit inférieure ou égale non pas à N/2, mais à N divisé par le nombre de signaux utiles émis par les différents capteurs respectifs, tous les capteurs du dispositif émettant toujours en synchronisation selon la période N.

La configuration selon l'invention est particulièrement avantageuse en termes de coût lié au câblage et de simplicité de l'implantation et de la maintenance du dispositif.

Un autre avantage de l'invention est que la multiplication de signaux dont les durées de top de synchronisation sont sensiblement différentes de sorte qu'il est possible de retracer à partir du signal combiné Sᵢₙ chacun des signaux individuels issus des différents capteurs respectifs, ce qui facilite la détection de défaut de l'un de ces capteurs.

Bien évidemment, les modes de réalisation décrits ci-dessus ne sont nullement limitatifs. En particulier, il est possible d'associer aux circuits de calcul d'assiette 25, 251, 252 des moyens de filtrage du signal complémentaires.

On notera enfin que le dispositif selon l'invention présente également des qualités de robustesse, car d'une part, le nombre de connexions est réduit par rapport aux solutions connues et d'autre part, les défauts d'un des capteurs 10a, 10b n'entraînent pas le défaut du dispositif entier.

Et le capteur configuré en capteur maître peut aussi être utilisé dans un système de correction monocapteur.

Il est également possible d'appliquer l'invention à tout ensemble comportant plusieurs capteurs et nécessitant un nombre aussi réduit que possible de liaisons entre les différents composants tout en garantissant la persistance des informations des différents capteurs en fonctionnement lorsque certains des capteurs reliés au même bus de transmissions de données sont défaillants.

## Revendications

1. Dispositif de correction de l'orientation d'au moins un projecteur (41, 42) d'un véhicule notamment automobile en fonction des variations d'assiette de celui-ci, le dispositif comprenant au moins deux capteurs (10a, 10b) aptes à engendrer chacun un signal élémentaire (Sₐ, S_{b}), des moyens (25, 251, 252) de traitement des signaux élémentaires (Sₐ,S_{b}) engendrés par les capteurs (10a,10b) afin d'élaborer une information d'assiette du véhicule, et un actionneur (31, 32) associé à chacun desdits au moins un projecteur (41, 42) du véhicule pour effectuer une correction d'orientation de faisceau en fonction de ladite information d'assiette, dispositif **caractérisé en ce qu'**il comprend au moins un premier câble conducteur (1000) reliant les capteurs entre eux deux à deux et un second câble conducteur (1000) reliant les capteurs auxdits moyens de traitement (25, 251, 252) et appliquant à ces derniers un signal (Sᵢₙ) combinant les signaux élémentaires (Sₐ, S_{b}) engendrés par les capteurs, et **en ce que** l'un des capteurs (10a) est un capteur maître, dont le ou chaque autre capteur (10b) est esclave.

2. Dispositif selon la revendication 1, **caractérisé en ce que** le(s)dit(s) premier(s) câble(s) conducteur(s) et ledit second câble conducteur constituent un bus unique (1000) sur lequel les signaux élémentaires (Sₐ, S_{b}) sont combinés.

3. Dispositif selon la revendication 2, **caractérisé en ce que** lesdits capteurs (10a, 10b) sont montés en parallèle sur ledit bus unique (1000).

4. Dispositif selon l'un des revendications 1 à 3, **caractérisé en ce que** chaque capteur (10a, 10b) est distinct des moyens de traitement (25, 251, 252).

5. Dispositif selon l'une des revendications 1 à 4, **caractérisé en ce que** les capteurs (10a, 10b) délivrent chacun un signal (Sₐ, S_{b}) de fréquence fixe comportant une partie utile pendant une durée utile (Tₐ, T_{b}), dont le rapport cyclique variable est représentatif de la mesure délivrée par le capteur associé (10a, 10b).

6. Dispositif selon la revendication précédente, **caractérisé en ce que** le signal élémentaire (Sₐ, S_{b}) émis par chaque capteur (10a, 10b) comprend un signal de synchronisation pendant une durée de synchronisation (T_{Synchroa}, T_{Synchrob}), immédiatement avant ladite partie utile.

7. Dispositif selon la revendication précédente, **caractérisé en ce que** pour chaque capteur (10a, 10b) la somme de la durée utile (Tₐ, T_{b}) et de la durée de synchronisation (T_{Synchroa}, T_{Synchrob}) est inférieure à une fraction déterminée de ladite fréquence fixe.

8. Dispositif selon la revendication précédente, **caractérisé en ce que** la somme desdites fractions déterminées est inférieure ou égale à l'unité.

9. Dispositif selon l'une des revendications 6 à 8, **caractérisé en ce que** le rapport cyclique de la partie utile de chaque signal élémentaire (Sₐ, S_{b}) est toujours compris entre une valeur limite basse supérieure à 0%, et une valeur limite haute inférieure à 100%.

10. Dispositif selon la revendication précédente, **caractérisé en ce que** ladite limite basse est égale à 10% et ladite limite haute est égale à 90%.

11. Dispositif selon la revendication 9 ou 10, **caractérisé en ce que** la durée de synchronisation (T_{Synchroa}, T_{Synchrob}) de chaque signal élémentaire (Sₐ, S_{b}) est toujours inférieure à la durée que peut prendre ladite partie utile lorsque celle-ci est égale à sa limite basse, ou toujours supérieure à la durée que peut prendre ladite partie utile lorsque celle-ci est égale à sa limite haute.

12. Dispositif selon l'une des revendications 5 à 11, **caractérisé en ce que** ladite fréquence fixe est la même pour tous les capteurs (10a, 10b).

13. Dispositif selon l'une des revendications précédentes, **caractérisé en ce que** les durées de synchronisation des capteurs (10a, 10b) respectifs du dispositif sont différentes les unes des autres.

14. Dispositif selon la revendication précédente, **caractérisé en ce que** chaque capteur esclave (10b) est muni de moyens pour scruter la présence du signal élémentaire (Sₐ) du capteur maître (10ₐ) sur le câble conducteur unique (1000) et pour synchroniser l'émission de son signal élémentaire (S_{b}) à l'émission du signal élémentaire (Sₐ) du capteur maître (10a) une fois celui-ci détecté.

15. Dispositif selon l'une des revendications précédentes, **caractérisé en ce que** chaque capteur esclave (10b) est apte à émettre son signal élémentaire (S_{b}) en cas d'absence du signal élémentaire (Sₐ) du capteur maître (10a) sur le câble conducteur unique (1000) pendant une durée supérieure à la période dudit signal du capteur maître (10a).

## Claims

1. Device for levelling the orientation of at least one headlight (41, 42) of a vehicle, and in particular a motor vehicle, according to variations of positioning of the latter, the device comprising at least two sensors (10ₐ, 10_{b}) which can each generate an elementary signal (Sₐ, S_{b}), means 25, 251, 252) for processing of the elementary signals (Sₐ, S_{b}) generated by the sensors (10ₐ, 10_{b}) in order to process information concerning the positioning of the vehicle, and an actuator (31, 32) which is associated with each of the said at least one headlight (41, 42) of the vehicle, in order to implement levelling of the beam in accordance with the said positioning information, which device is **characterised in that** it comprises at least a first conductor cable (1000) which connects the sensors to one another in pairs, and a second conductor cable (1000) which connects the sensors to the said processing means (25, 251, 252) and applies to the latter a signal (Sᵢₙ) which combines the elementary signals (Sₐ, S_{b}) generated by the sensors, and **in that** each of the sensors (10ₐ) is a master sensor, of which the, or each, other sensor (10_{b}) is a slave.

2. Device according to claim 1, **characterised in that** the said first conductor cable(s) and the said second conductor cable constitute a single bus (1000) on which the elementary signals (Sₐ, S_{b}) are combined.

3. Device according to claim 2, **characterised in that** the said sensors (10ₐ, 10_{b}) are fitted in parallel on the said single bus (1000).

4. Device according to one of claims 1 to 3, **characterised in that** each sensor (10ₐ, 10_{b}) is distinct from the processing means (25, 251, 252).

5. Device according to one of claims 1 to 4, **characterised in that** the sensors (10ₐ, 10_{b}) each supply a signal (Sₐ, S_{b}) with a fixed frequency comprising a part which is useful for a useful duration (Tₐ, T_{b}), the variable cyclical ratio of which is representative of the measurement supplied by the associated sensor (10ₐ, 10_{b}).

6. Device according to the preceding claim, **characterised in that** the elementary signal (Sₐ, S_{b}) which is emitted by each sensor (10ₐ, 10_{b}) comprises a synchronisation signal for a duration of synchronisation (T_{Synchroa}, T_{Synchrob}), immediately before the said useful part.

7. Device according to the preceding claim, **characterised in that**, for each sensor (10ₐ, 10_{b}), the sum of the useful duration (Tₐ, T_{b}) and of the duration of synchronisation (T_{Synchroa}, T_{Synchrob}) is less than a predetermined fraction of the said fixed frequency.

8. Device according to the preceding claim, **characterised in that** the sum of the said predetermined fractions is the same as, or less than the unit.

9. Device according to one of claims 6 to 8, **characterised in that** the cyclical ratio of the useful part of each elementary signal (Sₐ, S_{b}) is always contained between a low limit value which is more than 0%, and a high limit value which is less than 100%.

10. Device according to the preceding claim, **characterised in that** the said low limit is equal to 10% and the said high limit is equal to 90%.

11. Device according to claim 9 or 10, **characterised in that** the duration of synchronisation (T_{Synchroa}, T_{Synchrob}) of each elementary signal (Sₐ, S_{b}) is always less than the duration which the said useful part may have when the latter is equal to its low limit, or always more than the duration which the said useful part may have when the latter is equal to its high limit.

12. Device according to one of claims 5 to 11, **characterised in that** the said fixed frequency is the same for all the sensors (10ₐ, 10_{b}).

13. Device according to one of the preceding claims, **characterised in that** the durations of synchronisation of the respective sensors (10ₐ, 10_{b}) of the device are different from one another.

14. Device according to the preceding claim, **characterised in that** each slave sensor (10_{b}) is provided with means for detecting the presence of the elementary signal (Sₐ) of the master sensor (10ₐ) on the single conductive cable (1000) and for synchronising the emission of its elementary signal (S_{b}) with the emission of the elementary signal (Sₐ) of the master sensor (10ₐ), once this has been detected.

15. Device according to one of the preceding claims, **characterised in that** each slave sensor (10_{b}) can emit its elementary signal (S_{b}) in the case of absence of the elementary signal (Sₐ) of the master sensor (10ₐ) on the single conductor cable (1000) for a duration which is more than the period of the said signal of the master sensor (10ₐ).

## Patentansprüche

1. Vorrichtung zur Korrektur der Ausrichtung wenigstens eines Scheinwerfers (41, 42) eines Fahrzeugs, insbesondere eines Kraftfahrzeugs, in Abhängigkeit von dessen Lageveränderungen, wobei die Vorrichtung wenigstens zwei Sensoren (10a, 10b), die jeweils ein Grundsignal (Sₐ, S_{b}) zu erzeugen vermögen, Mittel (25, 251, 252) zum Verarbeiten der von den Sensoren (10a, 10b) erzeugten Grundsignale (Sₐ, S_{b}) zum Erstellen einer Information über die Fahrzeuglage und einen Steller (31, 32) umfasst, der jedem der wenigstens einem Scheinwerfer (41, 42) des Fahrzeugs zugeordnet ist, um in Abhängigkeit von dieser Information über die Fahrzeuglage die Ausrichtung des Lichtbündels zu korrigieren,
wobei die Vorrichtung **dadurch gekennzeichnet ist, dass** sie wenigstens ein erstes Leiterkabel (1000), das die Sensoren untereinander paarweise verbindet, und ein zweites Leiterkabel (1000) umfasst, das die Sensoren mit den Verarbeitungsmitteln (25, 251, 252) verbindet und an diese ein Signal (Sᵢₙ) anlegt, das die von den Sensoren erzeugten Grundsignale (Sₐ, S_{b}) zusammenfasst, und dass einer der Sensoren (10a) ein Master-Sensor und der oder jeder andere Sensor (10b) ein Slave-Sensor ist.

2. Vorrichtung nach Anspruch 1,
**dadurch gekennzeichnet, dass** das (die) erste(n) Leiterkabel und das zweite Leiterkabel einen einzigen Bus (1000) bilden, auf dem die Grundsignale (Sₐ, S_{b}) zusammengefasst sind.

3. Vorrichtung nach Anspruch 2,
**dadurch gekennzeichnet, dass** die Sensoren (10a, 10b) auf dem einzigen Bus (1000) parallel geschaltet sind.

4. Vorrichtung nach einem der Ansprüche 1 bis 3,
**dadurch gekennzeichnet, dass** jeder Sensor (10a, 10b) separat von den Verarbeitungsmitteln (25, 251, 252) ausgeführt ist.

5. Vorrichtung nach einem der Ansprüche 1 bis 4,
**dadurch gekennzeichnet, dass** die Sensoren (10a, 10b) jeweils ein Signal (Sₐ, S_{b}) mit Festfrequenz abgegeben, das während einer nutzbaren Zeitspanne (Tₐ, T_{b}) einen Nutzanteil aufweist, dessen veränderbares Tastverhältnis für die durch den zugeordneten Sensor (10a, 10b) gelieferte Messung repräsentativ ist.

6. Vorrichtung nach dem vorhergehenden Anspruch,
**dadurch gekennzeichnet, dass** das von jedem Sensor (10a, 10b) abgegebene Grundsignal (Sₐ, S_{b}) während eines Synchronisationszeitraums (T_{Synchroa}, T_{Synchrob}) unmittelbar vor jedem Nutzanteil ein Synchronisationssignal umfasst.

7. Vorrichtung nach dem vorhergehenden Anspruch,
**dadurch gekennzeichnet, dass** für jeden Sensor (10a, 10b) die Summe aus der nutzbaren Zeitspanne (Tₐ, T_{b}) und dem Synchronisationszeitraum (T_{Synchroa}, T_{Synchrob}) kleiner ist als ein bestimmter Bruchteil der Festfrequenz.

8. Vorrichtung nach dem vorhergehenden Anspruch,
**dadurch gekennzeichnet, dass** die Summe dieser bestimmten Bruchteile kleiner oder gleich Eins ist.

9. Vorrichtung nach einem der Ansprüche 6 bis 8,
**dadurch gekennzeichnet, dass** das Tastverhältnis des Nutzanteils eines jeden Grundsignals (Sₐ, S_{b}) stets zwischen einem unteren Grenzwert von mehr als 0 % und einem oberen Grenzwert von unter 100 % liegt.

10. Vorrichtung nach dem vorhergehenden Anspruch,
**dadurch gekennzeichnet, dass** der untere Grenzwert gleich 10 % und der obere Grenzwert gleich 90 % ist.

11. Vorrichtung nach Anspruch 9 oder 10,
**dadurch gekennzeichnet, dass** der Synchronisationszeitraum (T_{Synchroa}, T_{Synchrob}) eines jeden Grundsignals (Sₐ, S_{b}) stets kleiner ist als der Zeitraum, den der Nutzanteil währen kann, wenn dieser seinem unteren Grenzwert entspricht, oder stets größer ist als der Zeitraum, den der Nutzanteil währen kann, wenn dieser seinem oberen Grenzwert entspricht.

12. Vorrichtung nach einem der Ansprüche 5 bis 11,
**dadurch gekennzeichnet, dass** die Festfrequenz für alle Sensoren (10a, 10b) gleich ist.

13. Vorrichtung nach einem der vorhergehenden Ansprüche,
**dadurch gekennzeichnet, dass** die Synchronisationszeiträume der jeweiligen Sensoren (10a, 10b) der Vorrichtung voneinander verschieden sind.

14. Vorrichtung nach dem vorhergehenden Anspruch,
**dadurch gekennzeichnet, dass** jeder Slave-Sensor (10b) mit Mitteln versehen ist, um das Vorhandensein des Grundsignals (Sₐ) des Master-Sensors (10a) auf dem einzigen Leiterkabel (1000) abzufragen und das Senden seines Grundsignals (S_{b}) mit dem Senden des Grundsignals (Sₐ) des Master-Sensors (10a) abzustimmen.

15. Vorrichtung nach einem der vorhergehenden Ansprüche,
**dadurch gekennzeichnet, dass** jeder Slave-Sensor (10b) sein Grundsignal (S_{b}) bei nicht vorhandenem Grundsignal (Sₐ) des Master-Sensors (10a) auf dem einzigen Leiterkabel (1000) während eines Zeitraums abzugeben vermag, der größer ist als der Zeitabschnitt des Signals des Master-Sensors (10a).
